# EUROPÄISCHE PATENTSCHRIFT

(11) **EP 0 683 358 B1**
(45) Veröffentlichungstag und Bekanntmachung des Hinweises auf die Patenterteilung: **07.10.1998**
(21) Anmeldenummer: 95103709.2
(22) Anmeldetag: 15.03.1995
(51) Int. Cl.: F23G 5/027

(54) **Verfahren zur thermischen Energiegewinnung aus Abfallmaterial, insbesondere Müll**
Method for gaining calorific energy from waste material, especially garbage
Méthode d'exploitation d'énergie thermique de matière à déchèts, en particulier d'ordures

(30) Priorität: 16.05.1994 CH 1510/94
(43) Veröffentlichungstag der Anmeldung: 22.11.1995
(73) Patentinhaber: Von Roll Umwelttechnik AG, 8005 Zürich (CH)
(72) Erfinder: Forsberg, Stefan, CH-8912 Obfelden (CH); Rüegg, Hans, CH-5610 Wohlen (CH)
(74) Vertreter: Patentanwälte Schaad, Balass, Menzl & Partner AG

(56) Entgegenhaltungen:
- EP-A- 0 595 067
- DE-A- 3 813 817
- DE-A- 4 031 493
- DE-B- 1 751 133
- GB-A- 871 604
- US-A- 3 334 599
- US-A- 3 871 286
- US-A- 5 245 936

## Beschreibung

Die Erfindung betrifft ein Verfahren zur thermischen Energiegewinnung aus Abfallmaterial, insbesondere Müll, bei welchem das Abfallmaterial schichtförmig auf einem Rost angeordnet und mit diesem durch einen Feuerungsraum gefördert wird unter gleichzeitiger Abfallschichtmischung durch den Rost, und bei welchem ein gasförmiges Oxidationsmittel dem Feuerungsraum zugeführt wird.

Auf diese Weise wird beispielsweise der Abfall in herkömmlichen Müllverbrennungsanlagen behandelt. Der Müll wird auf einem Verbrennungsrost mit Hilfe von beweglichen Rostblöcken durch den Feuerungsraum gefördert und dabei getrocknet und verbrannt. Als Oxidationsmittel wird Luft verwendet, die den Verbrennungsrost und die sich darauf befindenden Abfälle von unten nach oben durchströmt. Der Anteil des Abfalls, der die Zündtemperatur erreicht hat, wird entzündet, und die dabei freigesetzten Rauchgase werden in eine Nachbrennkammer gefordert, wo zum vollständigen Ausbrand der Rauchgase Sekundärluft zugegeben wird. Durch diese Verbrennungsmethode werden im Idealfall sämtliche organische Anteile des Mülls in Kohlendioxid und Wasser umgewandelt.

Nach der Verbrennung wird die entstandene Schlacke abgekühlt und zu einer Schlackendeponie oder zur Weiterverarbeitung transportiert. Die Rauchgase werden nach der Nachverbrennung meist durch einen Wärmeaustauscher geleitet, in welchem die entstandene Wärme teilweise zurückgewonnen wird, bevor sie zur Reinigung in nachgeschaltete Aggregate weitergeleitet werden.

Die oben beschriebene, herkömmliche Müllverbrennung weist gewisse Nachteile auf. Durch die Verwendung von Luft als Oxidationsmittel und daraus folgender vollständigen Verbrennung entsteht normalerwise eine Rauchgasmenge von etwa 5000 bis 6000 m³ pro Tonne Müll. Diese Rauchgase müssen einer aufwendigen Reinigung unterzogen werden, damit sie in die Atmosphäre emittiert werden dürfen. Die Aggregate zur Rauchgasreinigung und Wärmegewinnung müssen entsprechend gross und technisch aufwendig ausgelegt werden. Die Investitionskosten solcher Anlagen sind entsprechend hoch.

Ein weiterer Nachteil dieses Verfahrens besteht darin, dass bei der Luftdurchströmung durch den Verbrennungsrost und durch die Abfallschicht hindurch Stäube und teilweise nicht ausgebrannte Russ- und Aschenpartikel aufgewirbelt werden, die von den Rauchgasen in die nachgeschalteten Aggregate mittransportiert werden. Dort verursachen sie Ablagerungen, die besonders bei der Wärmerückgewinnung zu Problemen führen. Die Ablagerungen verschlechtern den Wärmedurchgang und verursachen Korrosionen an den Wärmetauscherflächen, die zu aufwendigen Revisionsarbeiten führen und ausserdem den Wirkungsgrad der Anlage senken.

Die Verbrennungstemperaturen sind wegen den Werkstoffen für die einsetzbaren Rostblöcke nicht frei wählbar. Auch ist die erreichbare Verweilzeit des Abfalls im Feuerrungsraum begrenzt und von der möglichen Baugrösse des Verbrennungsrostes abhängig.Dies wirkt sich negativ auf die Schlackequalität aus. Weil die Verbrennungstemperatur und die Verweilzeit des Abfalls auf dem Verbrennungsrost nicht frei gewählt werden kann, ist ein vollständiger Ausbrand der Schlacke nicht gewährleistet, und es bleiben eluierbare, anorganische Schadstoffe teilweise in der Schlacke zurück.

Um diese Probleme bei dem beschriebenen bekannten Müllverbrennungsverfahren zu lösen, wurden verschiedene alternative Verfahren entwickelt, die jedoch nach wie vor schwerwiegende Nachteile aufweisen.

Um die Verbrennungstemperatur zu erhöhen und die Rauchgasmenge und damit auch die Grösse und die Investitionskosten der nachgeschalteten Aggregate zu verringern, wurde die durch den Verbrennungsrost durchströmende Verbrennungsluft mit Sauerstoff angereichert. Dieses Verfahren führt jedoch zu nicht beherrschbaren Temperaturen auf dem Verbrennungsrost. Eine relevante Reduktion der Rauchgasmenge kann somit nicht erreicht werden, und die thermische und mechanische Rostbelastung steigt.

Neben der Müllverbrennung ist als weiteres thermisches Verfahren zur Energiegewinnung aus Abfall die Entgasung, auch als Pyrolyse, Schwelung oder Verkokung genannt, bekannt (vgl.dazu Fachzeitschrift Müll und Abfall 12/1978).

Bei allen auf Entgasung basierenden Verfahren wird der Abfall unter Sauerstoffauschluss erhitzt. Dabei werden die organischen Verbindungen im Abfall instabil; die flüchtigen Bestandteile entweichen, und die nicht flüchtigen Anteile werden in Koks umgewandelt.

Weil die Entgasung unter Sauerstoffausschluss erfolgen muss, wird bei den bisher bekannten Verfahren die für den endotherme Prozess notwendige Energie dem Abfall über Heizflächen zugeführt, die im direkten Kontakt mit dem Abfall stehen müssen. Beispiele solcher Heizflächen sind Drehrohre oder Kanäle, die entweder von aussen beheizt werden, oder mit innenliegenden Heizrohren versehen sind. Wegen der schlechten Wärmeleitung des Abfalls ist eine Vorbehandlung und Zerkleinerung des Abfalls vor dem eigentlichen Entgasungsprozess unumgänglich. Durch den Kontakt zwischen dem abrasiven Müll und den Heizflächen müssen die mechanischen Teile mit hohem Aufwand gewartet werden.

Andere bekannte thermische Verfahren basieren auf einer Einschmelzung des Abfalls, kombiniert mit Entgasung bzw. Vergasung. Bei diesen Verfahren werden praktisch ausschliesslich Schachtöfen als Hauptaggregat verwendet, wie sie aus der Roheisenherstellung bekannt sind. Aus der Eisenherstellung ist es aber bekannt, dass ein Schachtofen nur dann problemlos betrieben werden kann, wenn eine homogene Struktur des einzuschmelzenden Gutes gewährleistet ist. Ein heterogener Brennstoff wie Hausmüll weist auch nach einer Vorbehandlung keine solche homogene Stückigkeit auf. Dies führt zu Brückenbildungen im Schachtofen und zur 3ildung grösserer Agglomerate. Die für die Gas-Feststoffreaktion notwendige Feststoffoberfläche nimmt somit ab, und die Oxidierung der Organika ist nicht gewährleistet. Das hat zur Folge, dass die nicht ausgebrannten organischen Bestandteile in der Schmelze eingeschlossen werden und somit nicht mehr oxidieren können. Bei der nachfolgenden Abkühlung und Granulierung der Schmelze treten Bruchstellen auf, in denen die nichtoxidierten Rückstände zum Vorschein kommen. Die Produktion einer inerten Schlacke ist nicht gewährleistet.

Aus der Druckschrift US 3,334,599 ist ein Verbrennungsofen für Abfallmaterial bekannt, bei welchem die Primärluft von unten durch ein gasdurchlässiges Rostsystem geleitet wird, auf welchem sich das Abfallmaterial befindet. Zudem werden die Gase im Verbrennungsofen in zur Förderrichtung des Abfallmaterials entgegengesetzter Richtung geleitet. Dieser bekannte Verbrennungsofen weist die Nachteile auf, dass, nebst der erheblichen Rauchgasmenge, welche erzeugt wird, die Luftdurchströmung des Rostes von unten ein Aufwirbeln von Partikel verursacht, welche daher in nachgeschaltete Aggregate mittransportiert werden. Zudem treten auf dem Rostsystem sehr hohe und zudem nicht beherrschbare Temperaturen auf. Weiter ist der Müll am Rostende sowie das Gas am Austritt vollständig ausgebrannt, so dass diese Stoffe nicht mehr zur Energiegewinnung verwendet werden können.

Der vorliegenden Erfindung liegt die Aufgabe zugrunde, ein Verfahren der eingangs genannten Art zu schaffen, bei welchem die vorstehend genannten Nachteile eliminiert werden und die Rauchgasmenge erheblich reduziert wird.

Diese Aufgabe wird erfindungsgemäss dadurch gelöst, dass das gasförmige Oxidationsmittel ausschließlich oberhalb der sich auf dem Rost befindenden Abfallschicht innerhalb den Feuerungsraum eingeführt wird und dort mit aus dem Abfallmaterial mittels Strahlungswärme freigesetzten brennbaren flüchtigen Stoffen Flammen bildet, wobei die Flammen die Strahlungswärme zur Freisetzung der brennbaren flüchtigen Stoffe liefern, und das von den brennbaren flüchtigen Stoffen befreite Abfallmaterial als Müllkoks und die nichtverbrannten flüchtigen Stoffe als brennbares Gas gewonnen werden.

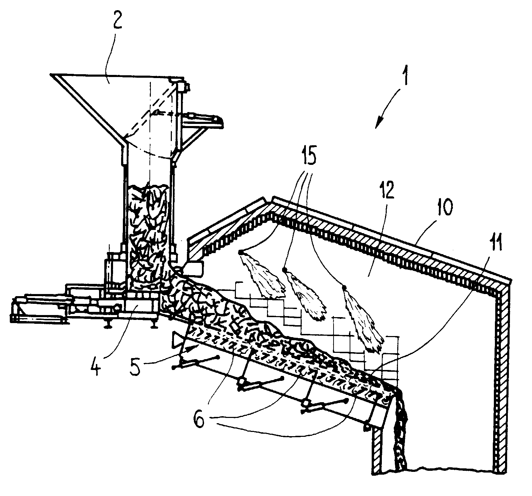

In der Zeichnung ist ein Ausführungsbeispiel einer Vorrichtung zum Durchführen des erfindungsgemässen Verfahrens schematisch dargestellt. Im folgenden wird die dargestellte vorrichtung sowie das Verfahren anhand der Zeichnung näher beschrieben.

Eine Abfall Verbrennungsanlage ist in der Zeichnung mit 1 bezeichnet. Der zu behandelnde Abfall, beispielsweise Müll, wird unzerkleinert in nicht näher dargestellten Weise in einen Einfülltrichter 2 gefüllt und mit Hilfe eines am unteren Ende des Einfalltrichters 2 angeordneten Dosierstössels 4 auf einen Rost 5 geschoben. Mit jedem Vorwärtsschub des Dosierstössels 4 wird die gleiche Menge Müll dem Rost 5 zugeführt. Die Vorschubgeschwindigkeit kann dabei vorzugsweise stufenlos geregelt werden.

Das Abfallmaterial wird auf dem Rost 5 durch einen ortsfesten Feuerungsofen 10 gefördert. Die sich auf dem Rost 5 befindende Abfallschicht ist in der Zeichnung mit 11 bezeichnet. Oberhalb des Rostes 5 und der Abfallschicht 11 weist der Feuerungsofen 10 einen Feuerungsraum 12 auf. Im Feuerungsraum 12 befinden sich örtlich verteilt mehrere Elemente 15 zur Zufuhr von einem gasförmigen Oxidationsmittel. Die Elemente 15 können vorzugsweise als Gaslanzen, Düsen oder mit Radialbohrungen versehene Rohre ausgebildet sein. Sie können wassergekühlt sein, was in der Zeichnung nicht näher dargestellt ist.

Der Rost 5 besteht aus drei Rostelementen 6, die ihrerseits mehrere austauschbare Rostblöcke aufweisen, die separat angetrieben werden können. Jedes Rostelement 6 ist mit mehreren gegeneinander beweglichen, treppenartig ausgebildeten Flächen versehen, die eine Schub- und Scherenwirkung auf das Abfallmaterial ausüben, so dass immer wieder neue Abfalloberflächen der weiter unten beschriebenen thermischen Behandlung im Feuerungsraum 12 ausgesetzt werden.

Das oberhalb der sich auf dem Rost 5 befindenden Abfallschicht 11 in den Feuerungsraum 12 eingeführte Oxidationsmittel bildet zusammen mit den aus dem Abfall entweichenden brennbaren flüchtigen Stoffen Flammen, die durch thermische Strahlung die Abfallschicht 11 so weit erhitzen, das eine Entgasung stattfindet. Das von den flüchtigen brennbaren Stoffen befreite Abfallmaterial wird zu Müllkoks. Die flüchtigen Stoffe verbrennen teilweise; die nicht verbrannten flüchtigen Stoffe werden als brennbares Gas gewonnen. Diese beiden Entgasungsprodukte stellen Energieträger dar, die als Brennstoffe weiter verwendet werden können.

Durch die sehr hohe Abbrandgeschwindigkeit der Flammen wird eine Diffusion des Oxidationsmittels in den Abfall verhindert und eine reine Entgasung sichergestellt. Die schlecht wärmeleitende Abfallschicht schützt im gewissen Sinne isolierend den Rost 5 vor der thermischen Strahlung bzw. Wärmeübertragung. Das Oxidationsmittel kommt mit den thermisch belasteten Anlageteilen nicht in Kontakt, und scmit ist die Vewendung von Oxidationsmitteln mit einem Sauerstoffanteil zwischen 10 und 100%, vorzugsweise 50 bis 100 %, insbesondere von Sauerstoff allein,möglich, die eine Reduktion der Abgasmenge um bis zu 80% bewirkt.

Der Müllkoks und die restlichen brennbaren Gase können als homogene Brennstoffe in einer externen, in der Zeichnung nicht dargestellten Anlage zur Energieumwandlung verwendet werden. Der Müllkoks muss zuvor von inerten Stoffen befreit, die brennbaren Gase vom Staub und Schadstoffen gereinigt werden. Die Entgasungsprodukte, d.h. Müllkoks und/oder brennbare Gase, können aber auch anlageintern nachverbrannt werden, beispielsweise in einem Drehrohrofen oder in der Wirbelschicht ( in der Zeichnung nicht dargestellt ).

Der Müllkoks kann auch auf einem nachgeschalteten, nicht näher dargestellten Verbrennungsrost in herkömmlicher Weise nachverbrannt werden. Da beim erfindungsgemässen Verfahren wie bereits erwähnt Oxidationsmittel mit hohem Sauerstoffanteil verwendet werden, und die Rauchgasmenge durch das Fehlen des Luftstickstoffes um bis zu 80% reduziert wird, entstehen Rauchgaszusammensetzungen mit bis zu 50% Wasserdampfanteil. Aus der Kohlenindustrie ist es bekannt, dass ein solches Gas als Vergasungsmittel zum Kohlenstoffabbau verwendet werden kann. Wird nun zur Nachverbrennung des Müllkokses der nachgeschaltete herkömmliche Verbrennungsrost verwendet, so können mit Vorteil zum Kohlenstoffabbau die Rauchgase rezirkuliert und durch den Verbrennungsrost als Vergasungsmittel geführt werden. Es könnte allerdings auch Wasserdampf zu diesem Zweck verwendet werden.

Die rezirkulierten Rauchgase können auch - angereichert mit dem Sauerstoff - als Oxidationsmittel im Feuerungsraum 12 eingesetzt werden.

Dadurch, dass beim erfindungsgemässen Verfahren das Oxidationsmittel ( Sauerstoff, Gas, angereichertes rezirkuliertes Rauchgas, oder Luft ) oberhalb der Abfallschicht 11 und nicht durch den Rost 5 in den Feuerungsraum 12 eingeführt wird, wird die Aufwirbelung der entstehenden Stäube und die daraus folgenden Nachteile vermieden.

Aufgrund der scherenden Wirkung des Rostes und der Tatsache, dass immer wieder neue Abfalloberflächen der thermischen Strahlung ausgesetzt sind, wird die notwendige Aufheizzeit in vorteilhafter Weise minimiert. Durch die vorteilhafte Verwendung des Rostes in Funktion eines betriebssicheren Aggregats zur Abfallbehandlung, und durch die Tatsache, dass keine mit dem Abfall im direkten Kontakt stehenden Heizflächen für den Entgasungsprozess notwendig sind, entfällt die Notwendigkeit einer Abfallvorbehandlung oder einer Abfallzerkleinerung.

Die Abfallschicht 11 kann nach Bedarf durch den separaten, regulierbaren Antrieb einzelner Rostblöcke der Länge des Rostes 5 entlang nach Bedarf geformt bzw. behandelt werden. Auch kann die Oxidationsmittelzufuhr an einzelnen Elementen 15, beispielsweise Gaslanzen, individuell dosiert bzw. die Dosiermenge reguliert werden.

Da im Feuerungsofen 10 nur Entgasung anstatt vollständiger Verbrennung stattfindet, und die Temperatur während des Entgasungsprozesses effizient reguliert werden kann, kann auch die thermische Beanspruchung der Anlage niedrig gehalten werden.

Die Reduktion der Rauchgase ist erheblich; die erfindungsgemässe Abfallbeseitigungsanlage ist klein und kostengünstig, da keine grossen und aufwendigen Aggregate zur Rauchgasreinigung benötigt werden.

## Patentansprüche

1. Verfahren zur thermischen Energiegewinnung aus Abfallmaterial, insbesondere Müll, bei welchem das Abfallmaterial schichtförmig auf einem Rost (5) angeordnet und mit diesem durch einen Feuerungsraum (12) gefördert wird unter gleichzeitiger Abfallschichtmischung durch den Rost (5), und bei welchem ein gasförmiges Oxidationsmittel dem Feuerungsraum (12) zugeführt wird, dadurch gekennzeichnet, dass das gasförmige Oxidationsmittel einen Sauerstoffanteil zwischen 10% und 100% aufweist, dass das gasförmige Oxidationsmittel ausschliesslich oberhalb der sich auf dem Rost (5) befindenden Abfallschicht (11) innerhalb den Feuerungsraum (12) eingeführt wird und dort mit aus dem Abfallmaterial mittels Strahlungswärme freigesetzten brennbaren flüchtigen Stoffen Flammen bildet, wobei die Flammen die Strahlungswärme zur Freisetzung der brennbaren flüchtigen Stoffe liefern, und das von den brennbaren flüchtigen Stoffen befreite Abfallmaterial als Müllkoks und die nichtverbrannten flüchtigen Stoffe als brennbares Gas gewonnen werden.

2. Verfahren nach Anspruch 1, dadurch gekennzeichnet, dass das Oxidationsmittel über mehrere örtlich verteilte Elemente (15) in den Feuerungsraum (12) eingeführt wird.

3. Verfahren nach Anspruch 2, dadurch gekennzeichnet, dass das Oxidationsmittel über Gaslanzen zugeführt wird.

4. Verfahren nach Anspruch 2, dadurch gekennzeichnet, dass das Oxidationsmittel über Düsen zugeführt wird.

5. Verfahren nach Anspruch 2, dadurch gekennzeichnet, dass das Oxidationsmittel über Rohre zugeführt wird, die mit Radialbohrungen versehen sind.

6. Verfahren nach Anspruch 2, dadurch gekennzeichnet, dass die Oxidationsmittelzufuhr an einzelnen Elementen (15) individuell dcsierbar ist.

7. Verfahren nach Anspruch 2, dadurch gekennzeichnet, dass die Elemente (15) gekühlt sind.

8. Verfahren nach einem der Ansprüche 1 bis 7, dadurch gekennzeichnet, dass das gewonnene brennbare Gas vom Staub und Schadstoffen gereinigt als Brennstoff zu einer externen Energieumwandlung verwendet wird.

9. Verfahren nach einem der Ansprüche 1 bis 7, dadurch gekennzeichnet, dass der Müllkoks von inerten Stoffen befreit und als Brennstoff zu einer externen Energieumwandlung verwendet wird.

10. Verfahren nach einem der Ansprüche 1 bis 7, dadurch gekennzeichnet, dass das brennbare Gas und/oder der Müllkoks anlageintern in einem dem Feuerungsraum (12) nachgeschalteten Aggregat teilweise oder vollständig verbrannt werden.

11. Verfahren nach Anspruch 10, dadurch gekennzeichnet, dass der Müllkoks auf einem nachgeschalteten Verbrennungsrost teilweise oder vollständig verbrannt wird.

12. Verfahren nach Anspruch 11, dadurch gekennzeichnet, dass durch den Verbrennungsrost mit Sauerstoff angereichertes Rauchgas rezirkuliert wird.

13. Verfahren nach einem der vorangehenden Ansprüche , dadurch gekennzeichnet, dass man als gasförmiges Oxidationsmittel im Feuerungsraum (12) mit Sauerstoff angereichertes rezirkuliertes Rauchgas verwendet.

14. Verfahren nach einem der Ansprüche 1 bis 12, dadurch gekennzeichnet, dass das gasförmige Oxidationsmittel einen Sauerstoffanteil von vorzugsweise 50 bis 100%, insbesondere 100 % aufweist.

15. Vorrichtung zum Durchführen des Verfahrens nach Anspruch 1, gekennzeichnet durch einen ortsfesten Feuerungsofen (10), in dem der Rost (5) angeordnet ist, und der den Feuerungsraum (12) aufweist, innerhalb welchem entlang des Rostes (5) ausschließlich oberhalb der auf dem Rost (5) anzuordnenden Abfallschicht (11) mehrere Elemente (15) zur Zufuhr des Oxidationsmittels angeordnet sind.

## Claims

1. A method for gaining calorific energy from waste material, in particular garbage, wherein the waste material is arranged in layers on a grate (5) and is conveyed thereby through a combustion chamber (12) with a simultaneous mixing of the layers of waste by the grate (5), and wherein a gaseous oxidizing agent is fed to the combustion chamber (12), characterized in that the gaseous oxidizing agent has an oxygen content between 10% and 100%, that the gaseous oxidizing agent is introduced inside the combustion chamber (12) exclusively above the waste layer (11) situated above the grate (5) and there forms flames with the combustible volatile substances released from the waste material by means of radiant heat, in which arrangement the flames supply the radiant heat for releasing the combustible volatile substances, and the waste material purged of the combustible volatile substances is obtained as refuse-based coke and the unburnt volatile substances as a combustible gas.

2. A method according to claim 1, characterized in that the oxidizing agent is introduced into the combustion chamber (12) via several locally distributed elements (15).

3. A method according to claim 2, characterized in that the oxidizing agent is introduced via gas lances.

4. A method according to claim 2, characterized in that the oxidizing agent is introduced via nozzles.

5. A method according to claim 2, characterized in that the oxidizing agent is introduced via pipes which are provided with radial bores.

6. A method according to claim 2, characterized in that the supply of the oxidizing agent can be individually regulated at individual elements (15).

7. A method according to claim 2, characterized in that the elements (15) are cooled.

8. A method according to one of claims 1 to 7, characterized in that the obtained combustible gas, purged of dust and pollutants, is used as fuel for an extraneous energy conversion.

9. A method according to one of claims 1 to 7, characterized in that the refuse-based coke is purged of inert substances and is used as fuel for an extraneous energy conversion.

10. A method according to one of claims 1 to 7, characterized in that the combustible gas and/or the refuse-based coke are burnt partially or completely inside the installation in a unit disposed after the combustion chamber (12).

11. A method according to claim 10, characterized in that the refuse-based coke is burnt partially or completely on a combustion grate disposed down the line.

12. A method according to claim 11, characterized in that the flue gas, enriched with oxygen by means of the combustion grate is recirculated.

13. A method according to one of the preceding claims, characterized in that recirculated oxygen-enriched flue gas is used as the gaseous oxidizing agent in the combustion chamber (12).

14. A method according to one of claims 1 to 12, characterized in that the gaseous oxidizing agent has an oxygen content of preferably 50 to 100 %, in particular 100 %.

15. An apparatus for operating the method according to claim 1, characterized by a furnace (10) fixed in position, wherein the grate (5) is arranged, and which has the combustion chamber (12) within which several elements (15) for feeding the oxidizing agent are arranged along the grate (5), exclusively above the waste layer (11) arranged on the grate (5).

## Revendications

1. Procédé pour la récupération d'énergie thermique à partir de matériau de déchets, en particulier d'ordures, dans lequel ce matériau est déposé sous forme de couche sur une grille (5) et est transporté au moyen de cette grille à travers une chambre de combustion (12), tout en mélangeant simultanément les couches de déchets à travers la grille (5), et dans lequel on amène à la chambre de combustion (12) un agent d'oxydation sous forme gazeuse, caractérisé en ce que l'agent d'oxydation sous forme gazeuse présente une teneur en oxygène comprise entre 10% et 100%, est introduit exclusivement au-dessus de la couche de déchets (11) qui se trouve sur la grille (5) à l'intérieur de la chambre de combustion (12), et forme dans celle-ci des flammes avec les substances volatiles combustibles qui sont libérées hors du matériau au moyen de la chaleur de rayonnement, et dans lequel les flammes fournissent la chaleur de rayonnement pour libérer les substances volatiles combustibles, le matériau libéré des substances volatiles combustibles étant récupéré sous forme de coke de déchets, tandisque les substances volatiles qui n'ont pas brûlé sont récupérées sous forme de gaz combustible.

2. Procédé selon la revendication 1, caractérisé en ce que l'agent d'oxydation est introduit dans la chambre de combustion (12) au moyen de plusieurs éléments répartis dans l'espace (15).

3. Procédé selon la revendication 2, caractérisé en ce que l'agent d'oxydation est introduit par l'intermédiaire de lances à gaz.

4. Procédé selon la revendication 2, caractérisé en ce que l'agent d'oxydation est introduit au moyen de buses.

5. Procédé selon la revendication 2, caractérisé en ce que l'agent d'oxydation est introduit par l'intermédiaire de tubes qui sont pourvus de perçages radiaux.

6. Procédé selon la revendication 2, caractérisé en ce que l'amenée de l'agent d'oxydation au niveau des éléments individuels (15) est susceptible d'être dosée de façon individuelle.

7. Procédé selon la revendication 2, caractérisé en ce que les éléments (15) sont refroidis.

8. Procédé selon l'une des revendications 1 à 7, caractérisé en ce que le gaz combustible récupéré est débarrassé des poussières et des produits nocifs et utilisé comme combustible pour une conversion externe en énergie.

9. Procédé selon l'une des revendications 1 à 7, caractérisé en ce que le coke de déchets est débarrassé des matières inertes et utilisé comme combustible pour une conversion externe en énergie.

10. Procédé selon l'une des revendications 1 à 7, caractérisé en ce que le gaz combustible et/ou le coke de déchets sont brûlés partiellement ou totalement à l'intérieur de l'installation, dans une unité disposée en aval de la chambre de combustion (12).

11. Procédé selon la revendication 10, caractérisé en ce que le coke de déchets est brûlé partiellement ou totalement sur une grille de combustion, disposée en aval.

12. Procédé selon la revendication 11, caractérisé en ce que l'on recycle à travers la grille des gaz de combustion enrichis en oxygène.

13. Procédé selon l'une des revendications précédentes, caractérisé en ce que l'on utilise comme agent d'oxydation sous forme gazeuse dans la chambre de combustion (12) des gaz recyclés enrichis en oxygène.

14. Procédé selon l'une des revendications 1 à 12, caractérisé en ce que l'agent d'oxydation sous forme gazeuse présente une teneur en oxygène comprise de préférence entre 50 et 100%, et en particulier égale à 100%.

15. Appareil pour la mise en oeuvre du procédé selon la revendication 1, caractérisé par un four de combustion fixe (10), dans lequel est agencée la grille (5), et qui présente une chambre de combustion (12) à l'intérieur de laquelle sont agencés plusieurs éléments (15) pour l'admission de l'agent d'oxydation, le long de la grille (5) et exclusivement au-dessus de la couche de déchets (11) placé sur la grille (5).
